(19) Europäisches Patentamt
European Patent Office
Office européen des brevets

(11) **EP 0 809 088 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(51) Int Cl.⁶: **G01F 1/32**

(21) Anmeldenummer: **97107816.7**

(22) Anmeldetag: **13.05.1997**

(54) **Messwertgeber für Wirbeldurchflussmesser**

Transducer for vortex flowmeter

Transducteur pour un débitmètre à tourbillons

(84) Benannte Vertragsstaaten:
**AT DE ES FR GB IE IT PT**

(30) Priorität: **22.05.1996 DE 19620655**

(43) Veröffentlichungstag der Anmeldung:
**26.11.1997 Patentblatt 1997/48**

(73) Patentinhaber: **KEM KÜPPERS ELEKTROMECHANIK GMBH**
**85757 Karlsfeld (DE)**

(72) Erfinder: **Steuer, Thomas Klaus, Dipl.-Ing. (FH)**
**85221 Dachau (DE)**

(74) Vertreter: **Heim, Hans-Karl, Dipl.-Ing. et al**
**Weber & Heim**
**Patentanwälte**
**Irmgardstrasse 3**
**81479 München (DE)**

(56) Entgegenhaltungen:
**WO-A-83/03299**       **DE-A- 2 741 827**
**DE-A- 3 626 565**    **DE-A- 4 036 869**
**US-A- 3 759 096**

**Beschreibung**

Die Erfindung betrifft einen Meßwertgeber für einen Wirbeldurchflußmesser gemäß dem Oberbegriff des Anspruchs 1.

Wirbeldurchflußmesser werden zur Volumenstrommessung gasförmiger, flüssiger und dampfförmiger Medien eingesetzt und dienen der Optimierung technischer Prozesse, insbesondere in der chemischen Industrie, Wasserwirtschaft und Energieversorgung.

Das Funktionsprinzip der Wirbeldurchflußmesser beruht auf einer Wirbelbildung, welche durch einen in einem Meßrohr angeordneten Wirbelkörper hervorgerufen wird. Dieser Wirbelkörper, der auch als Prall- oder Staukörper bezeichnet wird, wird derart im Meßrohr angeordnet, daß seine Anströmseite senkrecht zur Strömungsrichtung verläuft. Wird der Wirbeldurchflußmesser von einem Medium durchströmt, so werden beim Umströmen des Wirbelkörpers an dessen Kontur wechselseitig Wirbel erzeugt. Um den Ort der Wirbelbildung geometrisch genau festzulegen, kann die Kontur mit sogenannten Abrißkanten versehen sein. Diese Wirbel bilden stromabwärts eine als Karmansche Wirbelstraße bekannte regelmäßige Wirbelschleppe. Durch die vorbeiströmenden Wirbel und die dabei auftretenden Druckunterschiede wird eine Wechselkraft auf ein Rückteil ausgeübt, welches in der Regel plattenförmig ausgebildet ist und auch als Abtastplatte bezeichnet wird. Die wechselnden sinusförmigen Schwingungen der Abtastplatte ändern sich mit der Wirbelfrequenz, die wiederum von der Strömungsgeschwindigkeit des zu messenden Mediums abhängt. Bei anderen Bauarten von Wirbelfrequenz-Durchflußmeßgeräten werden die auftretenden Wirbel z.B. mittels Thermistoren, Drucksensoren, Dehnmeßstreifen, kapazitiven Sensoren oder mittels Ultraschall detektiert.

Aus der DD-PS 210 972 ist ein Meßwertgeber für Wirbeldurchflußmesser bekannt, der aus einem Staukörper zur Wirbelerzeugung und einem Rückteil zur Wirbelerfassung besteht. Der Staukörper ist zweiteilig ausgebildet und weist neben einer vorgelagerten Anströmplatte mit einer stufenförmigen Verjüngung Abriß-, Kontraktions- und Abströmkanten auf. Das Rückteil zur Wirbelerfassung besteht aus zwei Stabilisierungsplatten und einer dazwischen angeordneten Abtastplatte. Anordnung und Ausbildung eines elektromechanischen Wandlers, der in der Regel für derartige Meßwertgeber verwendet wird, sind nicht offenbart.

Dieser bekannte Meßwertgeber für Wirbeldurchflußmesser ist aufgrund der mit dem Wirbelkörper verbundenen, insbesondere verschweißten, rückseitigen Abtastplatte relativ störanfällig. Außerdem ist die Fertigung aufgrund der relativ komplizierten Störkörperausbildung kostenintensiv, und in der Praxis ist es schwer, eine gleichbleibende Maßhaltigkeit der Geometrie bei einer Serienfertigung zu gewährleisten. Auch hinsichtlich der Beständigkeit gegenüber großen Belastungen durch das zu messende Medium, beispielsweise hohen Drücken, Temperaturen und Strömungsgeschwindigkeiten wird der bekannte Meßwertgeber nicht in jedem Fall den Anforderungen gerecht.

Aus der DE 27 41 827 ist ein gattungsbildender Wirbeldurchflußmesser bekannt. Er weist einen Wirbelkörper auf, welcher im Querschnitt T-förmig, quadratisch oder auch dreieckig geformt sein kann. Der Wirbelkörper ist mit einem Druckfühler versehen und weist senkrechte Schlitze auf, welche einen Wirbeldetektionsbereich zwischen einem Wirbelerzeugungsbereich und einem Wirbelerfassungsbereich bilden. Dabei kann sowohl der Wirbelerzeugungsbereich als auch der Wirbelerfassungsbereich elastisch und biegbar und der jeweils andere Bereich kompakt und fest ausgebildet sein.

Der bekannte Meßwertgeber ist robust, jedoch nicht in jedem Fall sowohl für niedrige als auch für hohe Strömungsgeschwindigkeiten geeignet.

Der Erfindung liegt die **Aufgabe** zugrunde, einen besonders robusten Meßwertgeber für Wirbeldurchflußmesser zu schaffen, welcher sowohl für niedrige als auch hohe Strömungsgeschwindigkeiten von Gasen, Dämpfen und Flüssigkeiten geeignet ist und bei hohen Temperaturen und hohen Drücken sowie bei verschmutzten Meßmedien und Meßmedien mit niedrigen und hohen Dichten gleichermaßen eine hohe Meßempfindlichkeit und einen guten Signal-Störabstand bei einer optimalen Signalerfassung gewährleistet.

Erfindungsgemäß wird die Aufgabe durch einen Meßwertgeber mit den Merkmalen des Anspruchs 1 gelöst. Zweckmäßige und vorteilhafte Ausgestaltungen sind in der Figurenbeschreibung und in den Unteransprüchen enthalten.

Für ein Wirbelfrequenz-Durchflußmeßgerät (WDM) ist es wichtig, eine Störkörpergeometrie zu finden, die einen möglichst großen Proportionalitätsbereich zwischen Wirbelablösefrequenz und Störkörpergeometrie besitzt.

Mathematisch wird dieser Zusammenhang durch die sogenannte Strouhalzahl St beschrieben:

$$St = \frac{f \cdot d}{V_0}$$

mit

f = Wirbelablösefrequenz
d = Durchmesser des angeströmten Körpers
$V_0$ = Anströmgeschwindigkeit

Bei einem idealen Störkörper ist diese Strouhalzahl in Abhängigkeit von der Reynoldszahl Re (abhängig von Strömungsgeschwindigkeit, Dichte, Viskosität, Durchmesser) über einen möglichst großen Bereich konstant.

Grundgedanke der Erfindung ist es, einen Wirbelkörper, welcher einteilig ausgebildet ist, einen nahezu dreieckigen oder auch trapezförmigen Querschnitt aufweist und mit einem integrierten Sensor zum Detektieren der Meßsignale sowie an einen in Strömungsrichtung geneigten Längsseiten jeweils mit wenigstens einer Ausnehmung versehen ist, mit einer definierten Dimensionierung unter Ausbildung eines kompakten Wirbelerzeugungsbereichs mit einer Länge von 0,3 bis 0,6 der Gesamtlänge des Wirbelkörpers und eines Wirbelerfassungsbereichs und Wirbeldetektionsbereichs, welche als elastische Bereiche ausgebildet sind, mit einer Länge im Bereich von 0,4 bis 0,7 der Gesamtlänge zu schaffen und einen relativ großen Proportionalitätsbereich zwischen Wirbelablösefrequenz und Störkörpergeometrie zu erreichen.

Erfindungsgemäß ist der relativ kompakte Wirbelerzeugungsbereich des Wirbelkörpers mit einem Abrißkantenbereich versehen, welcher rechtwinklig zu einer Anströmseite des Wirbelkörpers verläuft. Nach dem Abrißkantenbereich verjüngen sich die Längsseiten des Wirbelkörpers in Richtung auf die senkrechten Ausnehmungen des Wirbeldetektionsbereichs mit einem ersten Winkel zur Anströmseite, und nach den Ausnehmungen des Wirbelkörpers verjüngen sich die Längsseiten mit einem zweiten Winkel zur Anströmseite, wobei der zweite Winkel größer ist als der erste Winkel.

Der Bereich der Wirbelerzeugung ist ein kompakter Bereich des einteiligen Wirbelkörpers und geht von der Anströmseite aus, welche senkrecht zur Strömungsrichtung verläuft.

Die Anströmseite bildet die Grundfläche des im Querschnitt dreieckigen oder trapezförmigen einteiligen Wirbelkörpers. Dabei ist dies der horizontale Querschnitt bei einem weitgehend vertikal angeordneten Störkörper, dessen rechteckige Grundfläche somit vertikal angeordnete Längsseiten aufweist. Nahezu mittig und parallel zur Anströmseite sind die Nuten oder Ausnehmungen, vorzugsweise über die gesamte Länge der Längsseiten, ausgebildet. Im Bereich dieser Ausnehmungen weist der erfindungsgemäß dimensionierte, einteilige Wirbelkörper die geringste Steifigkeit auf, wodurch eine optimale Signalerfassung mit einem in diesem Bereich angeordneten Sensor erreichbar ist.

An dem durch die längsseitigen Ausnehmungen gebildeten Wirbeldetektionsbereich schließt sich heckseitig bzw. stromaufwärts der Wirbelerfassungsbereich an, welcher wesentlich schmaler als der Wirbelerzeugungsbereich ausgebildet ist. Die auf den Wirbelerfassungsbereich einwirkenden Kräfte der Druckunterschiede der Wirbel werden als mechanische Belastung auf den Wirbeldetektionsbereich übertragen. Die im Wirbeldetektionsbereich angeordneten elektromechanischen Sensoren können nun die mechanische Belastung in ein elektrisches Signal umwandeln. Der Wirbelerfassungsbereich erstreckt sich nahezu über dieselbe Höhe wie der Wirbelerzeugungsbereich und der Wirbeldetektionsbereich. Dadurch besteht die Möglichkeit einer flächenhaften Abtastung der an vorderen Abrißkanten gebildeten Wirbelstraße.

Der erfindungsgemäß ausgebildete, einteilige Wirbelkörper mit Anordnung des Sensors unmittelbar im Bereich der Wirbeldetektionszone und/oder Wirbelerfassungszone gewährleistet eine außerordentlich hohe Meßempfindlichkeit bei gleichzeitig gutem Signal-Störabstand.

Bei Wirbeldurchflußmessern für große Nennweiten, beispielsweise für DN 50 - 300, kann der Sensor, beispielsweise ein piezoelektrisches Element, derart in dem Wirbeldetektionsbereich angeordnet werden, daß sich der Sensor nahezu zu gleichen Teilen in den Wirbelerzeugungsbereich und in den Wirbelerfassungsbereich erstreckt.

Für Wirbeldurchflußmesser kleinerer Nennweiten, beispielsweise für DN 10 - 40, kann der Sensor unmittelbar angrenzend an den Wirbeldetektionsbereich, jedoch in dem relativ kompakten Wirbelerzeugungsbereich angeordnet werden. Auf diese Weise wird eine optimale Wirbeldetektion durch einen oder auch mehrere Sensoren ermöglicht.

Wesentlich für eine besonders hohe Vibrationsunempfindlichkeit ist die große Fläche des Bereichs der Wirbelerfassung, d.h. des Heckbereiches, wodurch eine besonders hohe Kraftwirkung der Wirbel auf die in den Wirbelkörper integrierte Sensorik erreicht wird.

Durch die Gestaltung des Wirbelerfassungsbereiches entsteht eine Fläche, auf die die Kräfte der Wirbel einwirken können. Durch die flächenhafte Abtastung der Wirbel entsteht eine mathematisch integrierende Wirkung der Signalerfassung. Dies hat den besonderen Vorteil, daß Störungen in der Wirbelausbildung einen wesentlich geringeren Einfluß haben als bei Sensoren, die punktförmig Wirbel detektieren.

Ein weiterer Vorteil besteht darin, daß das Grundkonzept des erfindungsgemäßen Wirbelkörpers modifiziert und den jeweiligen Erfordernissen angepaßt werden kann. Insbesondere besteht die Möglichkeit, die in beiden Längsseiten des Wirbelkörpers auszubildenden Nuten oder Ausnehmungen, beispielsweise Ausfräsungen, hinsichtlich Tiefe, Breite und Profil den jeweiligen Erfordernissen anzupassen und die Meßempfindlichkeit, Eigenresonanz und die Robustheit des Wirbeldurchflußmessers auszuwählen.

Neben einer kostengünstigen Fertigung weist der einteilig ausgebildete Wirbelkörper als weitere Vorteile einen relativ unkomplizierten und kostengünstigen; Aufbau sowie eine gute Reproduzierbarkeit der Detektionseigenschaften aufgrund der zweckmäßigerweise gasdicht in den Wirbelkörper aufgenommenen Sensorik auf. Indem der Sensor bzw. die Sensoren vom zu messenden Medium isoliert und in den Wirbelkörper integriert angeordnet sind, ist die Gefahr der Zerstörung oder Beeinträchtigung durch Verschmutzungen des zu messenden Mediums, hohem Druck und hoher Temperatur bzw. hoher Strömungsgeschwindigkeit nahezu ausgeschlossen.

Die besonders einfache konstruktive Gestaltung des erfindungsgemäßen Wirbelkörpers ermöglicht zudem eine spanende Bearbeitung, wobei sowohl metallische als auch nichtmetallische Werkstoffe eingesetzt werden können. Weitere Vorteile sind ein im wesentlichen wartungsfreier Betrieb die Anwendbarkeit in Hochdruck- und Hochtemperaturbereichen, Messungen von Medien mit hohen und insbesondere geringen Dichten, sowie für kleine Strömungsgeschwindigkeiten bzw. Volumenströme bei Reynoldszahlen $\leq$ 10.000. Meßwertgeber mit zwei Sensoren sind vorteilhaft im eichpflichtigen Verkehr einzusetzen.

Die Erfindung wird nachstehend anhand von Ausführungsbeispielen weiter erläutert; die zugehörige Zeichnung zeigt in einer stark schematisierten Weise

Fig. 1 einen horizontalen Querschnitt einer ersten Ausbildung eines Störkörpers für einen erfindungsgemäßen Meßwertgeber;

Fig. 2 eine teilgeschnittene Seitenansicht des Meßwertgebers nach Fig. 1;

Fig. 3 eine teilgeschnittene Seitenansicht einer zweiten Ausbildungsvariante eines erfindungsgemäßen Meßwertgebers mit zwei Sensoren;

Fig. 4 einen horizontalen Querschnitt einer dritten Ausbildungsvariante eines erfindungsgemäßen Meßwertgebers;

Fig. 5 eine teilgeschnittene Seitenansicht des Meßwertgebers nach Fig. 4;

Fig. 6 eine Seitenansicht einer vierten Ausbildungsvariante eines erfindungsgemäßen Meßwertgebers und

Fig. 7 eine fünfte Ausbildungsvariante eines erfindungsgemäßen Meßwertgebers.

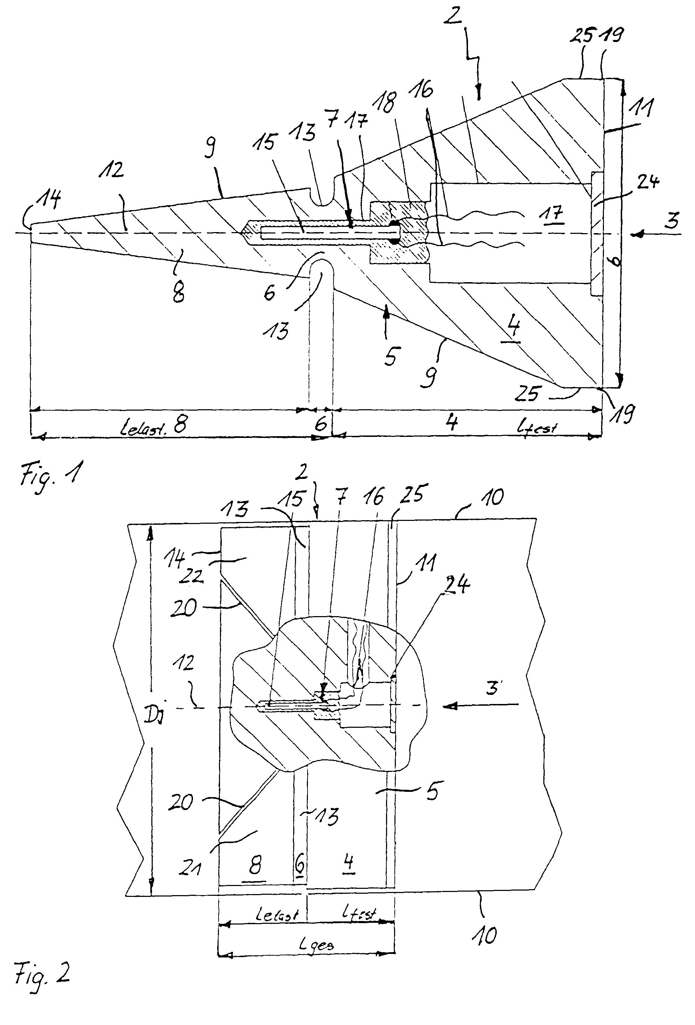

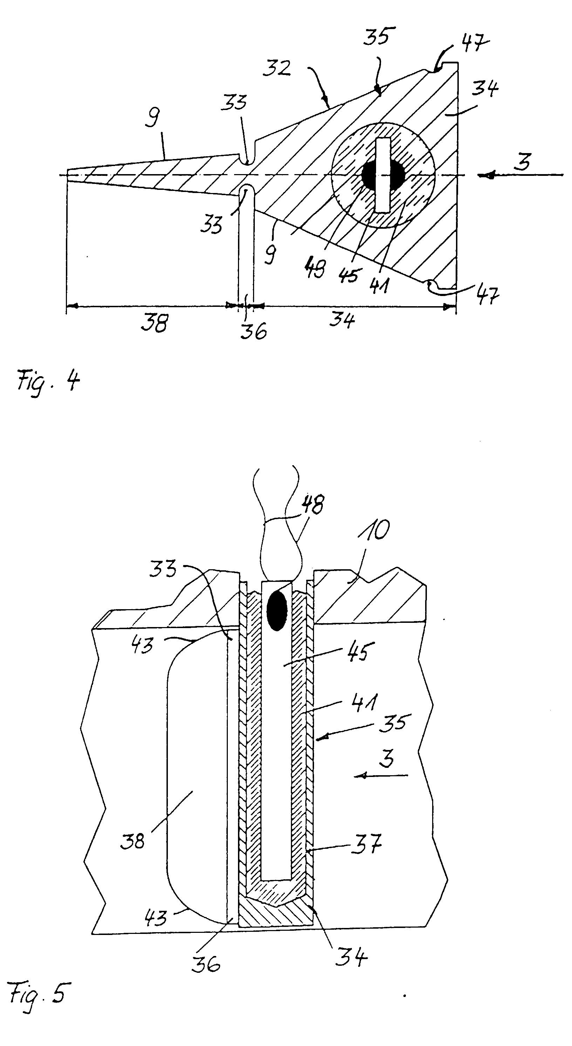

Fig. 1 und 2 zeigen eine erste Ausbildungsvariante eines Meßwertgebers 2 mit einem Wirbelkörper 5 und einem in den Wirbelkörper 5 integrierten Sensor 7.

Der Wirbelkörper 5 ist im horizontalen Querschnitt nahezu dreieckförmig oder auch trapezförmig ausgebildet und weist in Strömungsrichtung gemäß Pfeil 3 als einen ersten Bereich einen Wirbelerzeugungsbereich 4, als einen zweiten Bereich einen Wirbeldetektionsbereich 6 und als einen dritten Bereich einen Wirbelerfassungsbereich 8 auf.

Wie aus Fig. 1 hervorgeht, erstreckt sich der Wirbelerzeugungsbereich 4 von einer Anströmseite 11 bis zu einer Ausnehmung 13, welche in einem zentralen Bereich des Wirbelkörpers 5 in beiden Längsseiten 9 und symmetrisch zu einer Längsachse 12 ausgebildet ist. Durch die Anordnung und Ausbildung, beispielsweise Tiefe und Radius einer kreisbogenförmigen Ausnehmung 13 können die Meßempfindlichkeit und Eigenresonanz des Meßwertgebers 2 entsprechend den jeweiligen Erfordernissen vorgegeben werden. Die Ausnehmungen 13 bilden in ihrer längsseitigen Erstreckung einen Bereich geringster Steifigkeit. Indem in diesem Bereich 6 der Sensor 7 angeordnet werden kann, ist eine optimale Meßsignalgewinnung erreichbar.

Der Wirbelerfassungsbereich 8 erstreckt sich von den Ausnehmungen 13 bis zu einem heckseitigen Ende 14. Fig. 1 verdeutlicht, daß der Wirbelerzeugungsbereich 4 ein besonders kompakter und robuster Bereich ist, während der Wirbelerfassungsbereich 8 wegen seiner geringen Breite elastisch und schwingfähig ausgebildet ist.

Der Wirbelkörper 5 weist an seinen Längsseiten 9 Abrißkanten 19 auf, welche bei Umströmung auf beiden Seiten des Wirbelkörpers 5 wechselseitige Wirbel erzeugen, die in Richtung Wirbelerfassungsbereich 8 eine Wirbelschleppe bilden. Die sich ablösenden Wirbel streifen an der Wirbelerfassungszone bzw. an dem Wirbelerfassungsbereich 8 vorbei und induzieren wechselseitige Druckbelastungen, deren Frequenz von der Strömungsgeschwindigkeit des zu erfassenden Mediums abhängig ist.

Eine Erfassung der Schwingungen des Wirbelerfassungsbereichs 8 erfolgt mit dem Sensor 7. Dieser Sensor 7 ist aus einem geeigneten piezoelektrischen Element hergestellt und in einer Bohrung 17 derart befestigt, daß eine Übertragung der vom Wirbelerfassungsbereich 8 erfaßten Wirbelfrequenz auf den Sensor 7 erfolgt. Das piezoelektrische Element 15 ist zweckmäßigerweise in einer Vergußmasse 18 aufgenommen und von dieser allseitig umgeben. Als Vergußmasse 18 können beispielsweise Epoxidharze, Keramikkleber, Zement und weitere Kleber verwendet werden, wobei diese Vergußmassen eine lösbare Anordnung des piezoelektrischen Elements 15 ermöglichen sollten. Das piezoelektrische Element 15, beispielsweise ein plattenförmiger Lithiumniobat-Einkristall oder ein Bariumtitanat-Element gibt bei Verformung infolge der Schwingungen des Wirbelerfassungsbereichs 8 eine elektrische Wechselspannung über kontaktierte Ableitungen 16 ab, deren Frequenz proportional der Strömungsgeschwindigkeit des zu messenden Mediums ist.

Infolge der einteiligen oder einstückigen Ausbildung des Wirbelkörpers 5 kann die sich stufenförmig verengende Bohrung 17 von der Anströmseite 11 aus zunächst im Wirbelerzeugungsbereich 4, über den Wirbeldetektionsbereich 6 bis in den Wirbelerfassungsbereich 8 ausgebildet werden. Die Ausnehmung 17 ist im Bereich der Anströmseite 11, welche die Stirnseite des Wirbelerzeugungsbereichs 4 bildet, von einem Verschlußstopfen 24 verschlossen. Zusätzlich zu dem Verschlußstopfen 24 können weitere, nicht dargestellte Isolierplatten für einen insbesondere gasdichten Verschluß vorgesehen werden.

Die Fig. 1 und 2 verdeutlichen die Ausbildung der längsseitigen Ausnehmungen 13, welche insbesondere als Ausfräsung eingebracht werden können. Außerdem geht aus den Figuren hervor, daß diese Ausnehmung 13 sich über die gesamte Höhe der Längsseiten 9 erstrecken. Des weiteren sind die Ausnehmungen 13 und die sich zu einer Rückseite 14 verjüngenden Längsseiten 9 streng symmetrisch ausgebildet, um Meßwertverfälschungen zu vermeiden. Eine verlängerte Wirbelerfassungszone bzw. ein Wirbelerfassungsbereich 8 wird erreicht, wenn der Winkel zwischen jeder Längsseite 9 und einer Parallelen zur Anströmseite 11 größer als im Bereich der Wirbelerzeugungszone 4 ausgebildet ist.

Vorteile weist ein Wirbelkörper 5 mit einem Längenverhältnis Wirbelerzeugungsbereich 4 zum gesamten elastischen Teil, d.h. zur Wirbeldetektionszone 6 und Wirbelerfassungszone 8, in den Bereichen

$$l_{fest} = 0,3 - 0,6 \times l_{ges}$$

und

$$l_{elast} = 0,4 - 0,7 \times l_{ges}$$

auf.

Das Verhältnis Wirbelkörperbreite b zum Innendurchmesser $D_i$ eines Meßrohres 10 (Fig. 2) sollte zweckmäßigerweise im Bereich b : $D_i$ = 0,2 - 0,35 betragen. Das Verhältnis Wirbelkörperlänge in Strömungsrichtung und Wirbelkörperbreite b kann sich im Bereich 1 : b = 1,2 - 1,9 bewegen.

Fig. 1 und 2 zeigen einen Abrißkantenbereich 25, welcher rechtwinklig zur Anströmseite 11 verläuft. Erst nach diesem Abrißkantenbereich 25 verjüngen sich die Längsseiten 9 in Richtung Ausnehmungen 13 und Rückseite 14 unter Ausbildung eines trapezförmigen Wirbelerzeugungsbereichs 4 und Wirbelerfassungsbereichs 8, zwischen denen der Wirbeldetektionsbereich 6 durch die Ausnehmungen 13 ausgebildet ist.

Der Wirbelerfassungsbereich 8 reicht, wie aus Fig. 2 hervorgeht, nahezu über den gesamten Rohrdurchmesser $D_i$. Einschnitte 20, welche im Ausführungsbeispiel gemäß Fig. 2 etwa in einem 45-Grad-Winkel zur Meßrohrachse 12 verlaufen, gewährleisten eine Abkopplung störender Randeinflüsse der Strömung im Wirbelerfassungsbereich 8. Gleichzeitig besteht durch die zur Meßrohrachse 12 abgewinkelten Einschnitte 20 die Möglichkeit, die Meßempfindlichkeit durch Konzentration der Krafwirkung des Wirbelerfassungsbereich 8 auf den unmittelbaren Bereich des Sensor 7 zu beinflussen und zu optimieren. Durch die Einschnitte 20, welche von der Rückseite 14 bis zum Wirbeldetektionsbereich 6 reichen können, wird der Wirbelerfassungsbereich 8 dreigeteilt. Die außenseitigen abgekoppelten Bereiche 21, 22 bewirken eine Strömung, derart, daß die Qualität der ausgebildeten Wirbelstraße nicht beeinflußt wird.

Es ist zweckmäßig, die Breite der Einschnitte 20 in Abhängigkeit von der Nennweite des Meßrohrs 10 zu wählen. In der Regel beträgt die Breite des Einschnitts 20 0,005 - 0,002 x $D_i$ (Innendurchmesser des Meßrohrs 10).

In Fig. 7 ist eine alternative Anordnung von Einschnitten 20 in einem Wirbelerfassungsbereich 8 gezeigt. Die Einschnitte 20 sind von einer Rückseite 14 her parallel zur Rohrwand 10 bis zum Wirbeldetektionsbereich 6 eingebracht. Auch diese parallel ausgebildeten Einschnitte 20 bewirken eine Abkopplung störender Randeinflüsse, insbesondere von der Rohrinnenwannd. Die Strömung wird durch beide abgekoppelten Bereiche 21,22 so geführt, daß die Qualtiät der ausgebildeten Wirbelstraße nicht beeinflußt wird.

Fig. 6 zeigt in stark schematisierter Darstellung einen Wirbelkörper 5 mit einem Wirbelerfassungsbereich 8, welcher zur Wirbeldetektionszone 6 hin abgeschrägt, d.h. mit Abschrägungen 28 von der Wirbeldetektions zone 6 bis zur Rückseite 14 versehen ist. Auch durch diese Maßnahme sollen störende Einflüsse der Rohrwandung 10 verhindert werden. Im übrigen weist der Wirbelkörper 5, analog zu den vorangegangenen Figuren, einen Sensor (nicht dargestellt), einen Abrißkantenbereich 25 und Ausnehmungen 13 in den Längsseiten 9 auf.

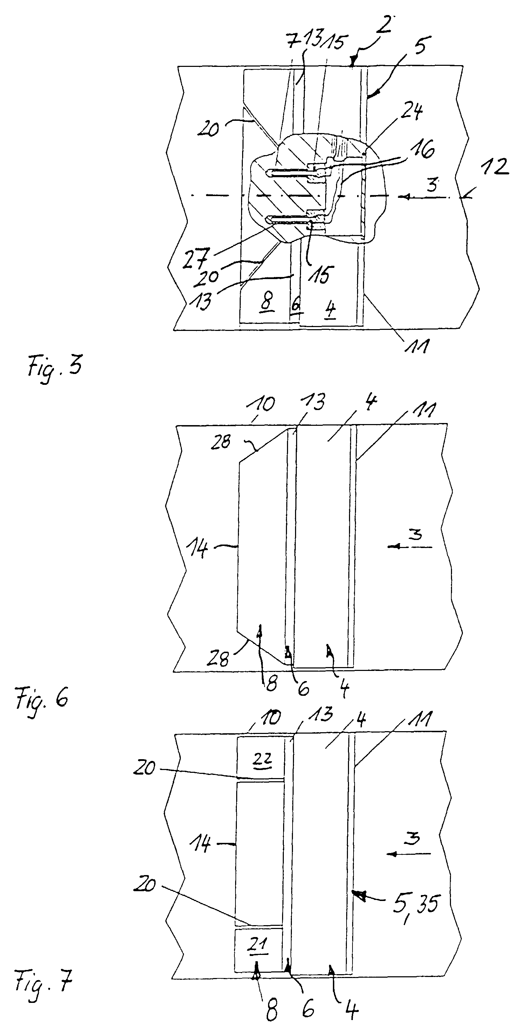

Der Meßwertgeber gemäß Fig. 3 entspricht in bezug auf die konstruktive Ausbildung des Wirbelkörpers 5 dem in den Fig. 1 und 2 dargestellten Meßwertgeber 2. Wie dieser ist auch der Meßwertgeber 2 der Fig. 3 einteilig ausgebildet und weist deshalb keine schwer reproduzierbaren Schweißnähte und Verbindungen oder Verbindungselemente auf, welche, da sie im unmittelbaren Bereich des Sensors angeordnet sein müssen, die Reproduzierbarkeit der Detektionseigenschaften der Sensorik entscheidend beeinflussen. Der Meßwertgeber 2 gemäß Fig. 3 weist eine erhöhte Zuverlässigkeit der Funktion auf, da zwei Sensoren 7,27 angeordnet sind. Durch diese redundante Anordnung erhält man zwei gleiche Ausgangssignale. Hierdurch ist es möglich, Störungen zu erkennen und das Gesamtsystem auch im eichpflichtigen Verkehr einzusetzen. Die zwei Sensoren 7,27 sind übereinander und symmetrisch zur Längsachse 12 des Meßwertgebers 2 angeordnet. Analog zur Fig. 2 werden die an den piezoelektrischen Elementen 15 kontaktierten Ableitungen 16 zu einer Meßwerterfassung (nicht dargestellt) geführt. Die weiteren wesentlichen Merkmale, insbesondere die beidseitigen Ausnehmungen 13 in den Längsseiten 9 und die abgewinkelten Einschnitte 20 im Wirbelerfassungsbereich 8 entsprechen den Fig. 1 und 2, so daß zur Erläuterung der mit identischen Bezugszeichen versehenen Merkmale auf dieses Ausführungsbeispiel verwiesen werden kann.

Der in den Fig. 4 und 5 gezeigte Meßwertgeber 32 ist für Nennweiten DN 10 - 40 vorgesehen. Im Gegensatz zu den Nennweiten DN 50 - 300 (Fig. 1 bis 3) ist es aus Abmessungsgründen nicht möglich, einen Sensor in der Wirbeldetektionszone 36 anzuordnen.

Aus diesen Gründen wird ein piezoelektrisches Element 45 in senkrechter Längsrichtung im Bereich des Wirbelerzeugungsbereichs 34 angeordnet. Dieser Wirbelerzeugungsbereich 34 ist im Gegensatz zu einem durch Ausnehmungen 33 gebildeten Wirbeldetektionsbereich 36 und einem Wirbelerfassungsbereich 38 relativ kompakt und stabil ausgebildet.

In Fig. 5 ist ein Sensor 45 aus einem plattenförmigen piezoelektrischen Element hergestellt und in einer Bohrung 37 mit Hilfe einer Vergußmasse 41 derart befestigt, daß eine spielfreie Übertragung der Wirbelfrequenz auf den Sensor 45 erfolgt. Der Sensor 45 reicht mit der Vergußmasse 41 und der Bohrung 37 bis in eine Rohrwandung 10, welche eine entsprechende Öffnung aufweist. Zwei am Sensor 45 kontaktierte Ableitungen 48 führen das im Sensor 45 enthaltene Signal aus dem Meßwertgeber 32 heraus.

Eine Wirbelerfassungszone bzw. ein Wirbelerfassungsbereich 38 ist zur Anpassung an das Geschwindigkeitsprofil des Meßmediums über den Querschnitt logarithmisch ausgebildet. Damit ergibt sich ein verrundeter oder abgerundeter Endbereich 43 des elastischen Wirbelererfassungsbereichs 38. Der Einfluß von Störungen aus dem Rohrwandungsbereich der Strömung auf das Meßsignal kann durch diese Endbereiche 43 verringert werden. Außerdem wirken die verrundeten Endbereiche 43 gleichzeitig strömungsführend.

Eine weitere Beeinflussung der Wirbelausbildung kann mit Ausnehmungen, Einformungen oder Einfräsungen unmittelbar in der Zone bzw. im Bereich der Wirbelerzeugung erreicht werden. Derartige zusätzlichen Einfräsungen 47 verlaufen nahezu parallel zu den Ausnehmungen 13 der Wirbeldetektionszone 36 und begünstigen die Wirbelausbildung und den Linearitätsbereich des Meßwertgebers. Bevorzugt sind diese Einfräsungen 47 abgerundet und an oder nahe den Abrißkanten ausgebildet.

**Patentansprüche**

1. Meßwertgeber für Wirbeldurchflußmesser mit einem Wirbelkörper (5, 35), welcher einteilig ausgebildet ist und einen nahezu dreieckigen oder trapezförmigen Querschnitt sowie senkrechte Ausnehmungen (13, 33) in Längsseiten (9) aufweist, wobei die Ausnehmungen (13, 33) einen Wirbeldetektionsbereich (6, 36) bilden, welcher zwischen einem Wirbelerzeugungsbereich (4, 34) und einem Wirbelerfassungsbereich (8, 38) angeordnet ist, und mit wenigstens einem Sensor (7) zum Detektieren der Meßsignale, welcher in dem oder nahe des Wirbeldetektionsbereichs (6, 36) angeordnet und in den Wirbelkörper (5, 35) integriert ist, dadurch **gekennzeichnet,**

daß der Wirbelkörper (5, 35) in Strömungsrichtung ein definiertes Längenverhältnis zwischen einem kompakt ausgebildeten Wirbelerzeugungsbereich (4, 34) und einem elastischen Bereich (6, 36; 8, 38) aus dem Wirbeldetektionsbereich (6, 36) und Wirbelerfassungsbereich (8, 38) aufweist, wobei der Wirbelkörper (5, 35) mit einer Gesamtlänge $l_{ges}$ derart dimensioniert ist, daß der kompakte Wirbelerzeugungsbereich (4, 34) eine Länge $l_{fest}$ im Bereich von 0,3 bis 0,6 x $l_{ges}$ und der Wirbelerfassungsbereich (8, 38) und Wirbeldetektionsbereich (6, 36) als elastische Bereiche eine Länge $l_{elast}$ im Bereich von 0,4 bis 0,7 x $l_{ges}$ aufweisen, daß der Wirbelerzeugungsbereich (4, 34) des Wirbelkörpers (5, 35) einen Abrißkantenbreich (25) aufweist, welcher rechtwinklig zu einer Anströmseite (11) des Wirbelkörpers (5, 35) verläuft,

daß sich nach dem Abrißkantenbereich (25) die Längsseiten (9) in Richtung auf die Ausnehmungen (13, 33) des Wirbeldetektionsbereichs (6, 36) mit einem ersten Winkel zur Anströmseite (11) verjüngen und

daß sich die Längsseiten (9) nach den Ausnehmungen (13, 33) des Wirbeldetektionsbereichs (6, 36) mit einem zweiten Winkel zur Anströmseite (11) verjüngen, wobei der zweite Winkel größer ist als der erste Winkel.

2. Meßwertgeber nach Anspruch 1, dadurch **gekennzeichnet,** daß der Wirbelkörper (5, 35) im Bereich der Anströmseite (11) eine Wirbelkörperbreite b aufweist und derart dimensioniert ist, daß das Verhältnis Wirbelkörerlänge l zu Wirbelkörperbreite b im Bereich zwischen 1,2 und 1,9 liegt.

3. Meßwertgeber nach einem der vorhergehenden Ansprüche, dadurch **gekennzeichnet,** daß die Ausnehmungen (13, 33) symmetrisch ausgebildet sind, nahezu rechtwinklig zur Längsachse (12) verlaufen und einen schmalen Biegebereich bilden, und daß durch die Tiefe, Breite, Profilgestaltung und Anordnung der Ausnehmungen (13, 33) die Meßempfindlichkeit, Eigenresonanz und Robustheit des Wirbeldurchflußmessers (2, 32) bestimmbar ist.

4. Meßwertgeber nach einem der vorhergehenden Ansprüche, dadurch **gekennzeichnet,** daß die Ausnehmungen (13, 33) als Ausfräsungen in einem aus Metall oder Kunststoff bestehenden Wirbelkörper (5, 35) eingebracht sind.

5. Meßwertgeber nach einem der Ansprüche 2 bis 4, dadurch **gekennzeichnet,**

daß der Wirbelkörper (5, 35) dem Verhältnis Wirbelkörperbreite b zum Innendurchmesser $D_i$ eines Meßrohres (10), in welches der Wirbelkörper (5, 35) eingesetzt ist, gleich 0,2 bis 0,35 genügt.

6. Meßwertgeber nach einem der vorhergehenden Ansprüche,
dadurch **gekennzeichnet,**
daß der Wirbelerfassungsbereich (8, 38) des Wirbelkörpers (5), welcher heckseitig ausgebildet ist, mit verrundeten oder abgerundeten Endbereichen (43) oder mit Abschrägungen (28) versehen ist, wobei die Abschrägungen (28) von dem Wirbeldetektionsbereich (6, 36) ausgehen und unter Verjüngung bis zu einer Rückseite (14) des Wirbelkörpers (5, 35) verlaufen.

7. Meßwertgeber nach einem der vorhergehenden Ansprüche 1 bis 5,
dadurch **gekennzeichnet,**
daß der Wirbelerfassungsbereich (8, 38) Einschnitte (20) aufweist, welche von der Rückseite (14) des Wirbelkörpers (5, 35) ausgehen und bis zu den Ausnehmungen (13, 33) des Wirbeldetektionsbereiches (6, 36) reichen, daß die Einschnitte (20) symmetrisch und parallel oder abgeschrägt zu der Längsachse (12) des Wirbelkörpers (5, 35) ausgebildet sind und die Breite der Einschnitte den Nennweiten der Wirbeldurchflußmesser anpaßbar sind.

8. Meßwertgeber nach einem der vorhergehenden Ansprüche,
dadurch **gekennzeichnet,**
daß als Sensor (7) ein piezoelektrisches Element (15) im Wirbeldetektionsbereich (6) angeordnet ist und daß sich das piezoelektrische Element (15) nahezu zu gleichen Teilen in den Wirbelerzeugungsbereich (4) und in den Wirbelerfassungsbereich (8) erstreckt.

9. Meßwertgeber nach einem der vorhergehenden Ansprüche,
dadurch **gekennzeichnet,**
daß zwei Sensoren (7, 27) in den Wirbelkörper (5) integriert und symmetrisch zu einer Längsachse (12) des Meßwertgebers (2) angeordnet sind.

10. Meßwertgeber nach einem der Ansprüche 1 bis 7,
dadurch **gekennzeichnet,**
daß der Sensor (35) vertikal ausgerichtet in dem Wirbelerzeugungsbereich (34) und nahe oder angrenzend an den Wirbeldetektionsbereich (36) angeordnet ist.

11. Meßwertgeber nach einem der vorhergehenden Ansprüche,
dadurch **gekennzeichnet,**
daß der wenigstens eine Sensor (7, 27) vom zu messenden Medium isoliert und insbesondere gasdicht im Wirbelkörper (5, 35) aufgenommen ist, daß als Sensor (7, 27) ein piezoelektrisches Element (15, 45), insbesondere ein plattenförmiger Lithiumniobat-Einkristall, ein Bariumtitanat-Element oder ein vergleichbares piezoelektrisches Element, eingesetzt und in einer Vergußmasse (18, 41) lösbar angeordnet ist.

12. Meßwertgeber nach einem der vorhergehenden Ansprüche,
dadurch **gekennzeichnet,**
daß der Wirbelkörper (5, 35) einen zylindrischen Abrißkantenbereich (25) aufweist und daß zwischen dem Abrißkantenbereich (25) und den sich verjüngenden Längsseiten (9) Einfräsungen (47) ausgebildet sind.

13. Meßwertgeber nach einem der vorhergehenden Ansprüche,
dadurch **gekennzeichnet,**
daß der Wirbelkörper (5, 35) einseitig oder beidseitig durch Verschweißen, Verschrauben, Einschrumpfen, Verstiften oder Verkleben in einem Meßrohr (10) fixierbar ist, wobei die Befestigung des Wirbelkörpers (5, 35) in Verbindung mit geeigneten Dichtelementen erfolgen kann.

**Claims**

1. Transducer for a vortex flowmeter comprising a vortex body (5, 35), said vortex body being formed in a one-piece manner and having a virtually triangular or trapezoidal cross-section as well as vertical recesses (13, 33) in longitudinal sides (9), said recesses (13, 33) forming a vortex detection area (6, 36) which is positioned between a vortex generation area (4, 34) and a vortex determination area (8, 38), and at least one sensor (7) for detecting measuring signals which is placed in or close to the vortex detection area (6, 36) and is integrated into the vortex body (5, 35),
**characterized** in

that the vortex body (5, 35), in flow direction, has a defined ratio of length of a compact vortex generation area (4, 34) to an elastic area (6, 36; 8, 38), built of the vortex detection area (6, 36) and the vortex determination area (8, 38), wherein the vortex body (5, 35), having a total length $l_{tot}$, is dimensioned in such a way that the compact vortex generation area (4, 34) has a length $l_{fixed}$ in the range from 0.3 to 0.6 x $l_{tot}$ and the vortex determination area (8, 38) and the vortex detecting area (6, 36) as elastic areas have a length $l_{elast}$ in the range from 0.4 to 0.7 x $l_{tot}$ ,

that the vortex generation area (4, 34) of the vortex body (5, 35) has a separating edge area (25) which is at right angles to the leading side (11) of the vortex body (5, 35),

that, following the separating edge area (25), the longitudinal sides (9) taper towards the recesses (13, 33) of the vortex detection area (6, 36) by formation of a first angle to the leading side (11), and

that, following the recesses (13, 33) of the vortex detection area (6, 36), the longitudinal sides (9) taper by formation of a second angle to the leading side (11), the second angle being larger than the first angle.

2. Transducer according to claim 1,
**characterized** in
that in the area of the leading side (11) the vortex body (5, 35) has a vortex body width b and is dimensioned in such a way that the ratio of the vortex body length l to the vortex body width b is in the range from 1.2 to 1.9.

3. Transducer according to one of the preceding claims,
**characterized** in
that the recesses (13, 33) are shaped symmetrically, passing virtually at right angles to the longitudinal axis (12), and form a narrow bending area, and that through the depth, width, form of profile, and arrangement of the recesses (13, 33) it is possible to determine the measuring sensitivity, natural resonance and robustness of the vortex flowmeter (2, 32).

4. Transducer according to one of the preceding claims,
**characterized** in
that said recesses (13, 33) are formed as milled slots in a vortex body (5, 35) made of metal or plastic material.

5. Transducer according to one of the claims 2 to 4,
**characterized** in
that the vortex body (5, 35) satisfies the ratio of the vortex body width b to the internal diameter $D_i$ of a measuring tube (10), into which the vortex body (5, 35) is inserted, of 0.2 to 0.35.

6. Transducer according to one of the preceding claims,
**characterized** in
that the vortex determination area (8, 38) which is formed at the rear side of said vortex body (5, 35) is provided with rounded or dished end regions (43) or with bevels (28), said bevels (28) emanating from the vortex detection area (6, 36) and passing accompanied by tapering to the rear side (14) of the vortex body (5, 35).

7. Transducer according to one of the preceding claims 1 to 5,
**characterized** in

that the vortex determination area (8, 38) has indentations (20) emanating from the rear side (14) of the vortex body (5, 35) and extending to the recesses (13, 33) of the vortex detection area (6, 36),

that the indentations (20) are symmetrical and parallel or bevelled to the longitudinal axis (12) of the vortex body (5, 35), and the width of the indentations can be adapted to the nominal width of the vortex flowmeter.

8. Transducer according to one of the preceding claims,
**characterized** in
that said sensor (7) is a piezoelectric element (15) placed in the vortex detection area (6) and that the piezoelectric element (15) extends in virtually equal parts into the vortex generation area (4) and the vortex determination area (8).

9. Transducer according to one of the preceding claims,
**characterized** in
that two sensors (7, 27) are integrated into the vortex body and are placed symmetrically to a longitudinal axis (12) of the transducer (2).

10. Transducer according to one of the claims 1 to 7,
**characterized** in
that the sensor (35) is placed oriented vertically in the vortex generation area (34) and close or adjacent to the vortex detection area (36).

11. Transducer according to one of the preceding claims,
**characterized** in
that the at least one sensor (7, 27) is isolated from the medium to be measured and is in particular received in gastight manner in the vortex body (5, 35), that said sensor (7, 27) is a piezoelectric element (15, 45), in particular a plate-like lithium niobate monocrystal, a barium titanate element, or a comparable piezoelectric element, which is detachably placed in a sealing compound (18, 41).

12. Transducer according to one of the preceding claims,
**characterized** in
that the vortex body (5, 35) has a cylindrical separating edge region (25) and that between the separating edge region (25) and the tapering longitudinal sides (9) milled slots (47) are formed.

**13.** Transducer according to one of the preceding claims,
**characterized** in
that the vortex body (5, 35) can be fixed on one or both sides by welding, screwing, shrinking in, pinning, or bonding in a measuring tube (10), wherein the fixing of the vortex body (5, 35) can take place in conjunction with suitable sealing elements.

## Revendications

**1.** Transducteur pour débitmètre à tourbillons, comprenant un corps à tourbillons (5, 35) réalisé en une seule pièce avec une section sensiblement triangulaire ou trapézoïdale et des cavités perpendiculaires (13, 33) dans les côtés longitudinaux (9), les cavités (13, 33) formant une plage de détection de tourbillons (6, 36) prévue entre une plage de génération de tourbillons (4, 34) et une plage de saisie de tourbillons (8, 38), et au moins un capteur (7) pour détecter les signaux de mesure, ce capteur étant situé dans la plage de détection de tourbillons ou à proximité de celle-ci (6, 36), en étant intégré dans le corps à tourbillons (5, 35),
caractérisé en ce que

- le corps à tourbillons (5, 35) présente, dans la direction de l'écoulement, un rapport de longueurs déterminé entre une plage de génération de tourbillons (4, 34) compacte, et une plage élastique (6, 36 ; 8, 38) de la plage de détection de tourbillons (6, 36) et de la plage de saisie de tourbillons (8, 38), le corps à tourbillons (5, 35) étant dimensionné avec une longueur totale $l_{ges}$ de façon que la plage générant les tourbillons (4, 34), compacte, présente une longueur $l_{fest}$ dans un domaine de 0,3 à 0,6 x $l_{ges}$ et que la plage de saisie de tourbillons (8, 38) et la plage de détection de tourbillons (6, 36) aient des plages élastiques d'une longueur $l_{elast}$ dans un domain de 0,4 à 0,7 x $l_{ges}$,
- la plage générant les tourbillons (4, 34) du corps à tourbillons (5, 35) ayant une zone de décrochage (25) à l'équerre par rapport au côté d'attaque (11) du corps à tourbillons (5, 35), et après la zone de décrochage (25), les côtés longitudinaux (9) vont en diminuant en direction des cavités (13, 33) de la plage de détection de tourbillons (6, 36) avec un premier angle par rapport au côté d'attaque (11), et les grands côtés (9), en aval des cavités (13, 33) de la zone de détection de tourbillons (6, 36), vont en diminuant selon un second angle par rapport au côté d'attaque (11), le second angle étant supérieur au premier angle.

**2.** Transducteur selon la revendication 1,
caractérisé en ce que
le corps à tourbillons (5, 35) présente, dans la zone du côté d'attaque (11), une largeur de corps b dimensionnée pour que le rapport entre la longueur l du corps à tourbillons et la largeur b du corps à tourbillons, se situe dans une plage comprise entre 1,2 et 1,9.

**3.** Transducteur selon l'une quelconque des revendications précédentes,
caractérisé en ce que
les cavités (13, 33) sont symétriques et dirigées sensiblement à l'équerre par rapport à l'axe longitudinal (12) en formant une étroite zone de flexion, et en ce que la profondeur, la largeur et la forme du profil ainsi que la disposition des cavités (13, 33) définissent la sensibilité de la mesure, la résonance propre et la robustesse du débitmètre à tourbillons (2, 32).

**4.** Transducteur selon l'une quelconque des revendications précédentes,
caractérisé en ce que
les cavités (13, 33) sont des parties fraisées dans un corps à tourbillons (5, 35) en métal ou en matière plastique.

**5.** Transducteur selon l'une quelconque des revendications 2 à 4,
caractérisé en ce que
le corps à tourbillons (5, 35) est placé dans un tube de mesure (10) avec un rapport entre la largeur b du corps à tourbillons et le diamètre intérieur $D_i$ du tube dans lequel le corps à tourbillons (5, 35) est placé, correspondant à une plage comprise entre 0,2 et 0,35.

**6.** Transducteur selon l'une quelconque des revendications précédentes,
caractérisé en ce que
la plage de saisie de tourbillons (8, 38) du corps à tourbillons (5), prévue sur le côté arrière, comporte des zones d'extrémité rondes ou arrondies (43) ou des parties en biais (28), et les parties en biais (28) sont dirigées à partir de la zone de détection de tourbillons (6, 36) et en diminuant jusqu'à un côté arrière (14) du corps à tourbillons (5, 35).

**7.** Transducteur selon l'une quelconque des revendications 1 à 5,
caractérise en ce que
la plage de saisie de tourbillons (8, 38) comporte des encoches (20) qui partent du côté arrière (14) du corps à tourbillons (5, 35) et arrivent jusqu'aux cavités (13, 33) de la plage de détection de tourbillons (6, 36), les encoches (20) étant symétriques et parallèles ou inclinées par rapport à l'axe longitudinal (12) du corps à tourbillons (5, 35), et la largeur des encoches est adaptée à la largeur nominale du débitmètre à tourbillons.

8. Transducteur selon l'une quelconque des revendications précédentes,
caractérisé en ce que
le capteur (7) est un élément piézo-électrique (15) placé dans la plage de détection de tourbillons (6) en l'élément piézo-électrique (15) s'étend pratiquement dans les mêmes parties, dans la plage de génération de tourbillons (4) et dans la plage de saisie de tourbillons (8).

9. Transducteur selon l'une quelconque des revendications précédentes,
caractérisé par
deux capteurs (7, 27) sont intégrés dans le corps à tourbillons (5) et montés symétriquement par rapport à un axe longitudinal (12) du transducteur (2).

10. Transducteur selon l'une quelconque des revendications 1 à 7,
caractérisé en ce que
le capteur (35) est aligné verticalement dans la plage générant les tourbillons (34) et à proximité ou de manière adjacente à la plage de détection de tourbillons (36).

11. Transducteur selon l'une quelconque des revendications précédentes,
caractérisé en ce que

au moins un capteur (7, 27) est isolé du milieu à mesurer et notamment logé de manière étanche au gaz dans le corps à tourbillons (5, 35), le capteur (7, 27) est un élément piézo-électrique (15, 45), notamment un monocristal de niobiate de lithium, en forme de plaquette, un élément en titanate de baryum ou un élément piézo-électrique comparable, et est monté de manière amovible dans une masse coulée (18, 41).

12. Transducteur selon l'une quelconque des revendications précédentes,
caractérisé en ce que

le corps à tourbillons (5, 35) comporte une plage de décrochage (25) cylindrique, et entre la plage de décrochage (25) et les côtés longitudinaux (9), allant en se rétrécissant, il y a les parties fraisées (47).

13. Transducteur selon l'une quelconque des revendications précédentes,
caractérisé en ce que
le corps à tourbillons (5, 35) est fixé d'un côté ou des deux côtés par soudure, vissage, frettage, brochage, collage, dans un tube de mesure (10), la fixation du corps à tourbillons (5, 35) pouvant se faire en liaison avec des éléments d'étanchéité appropriés.

Fig. 1

Fig. 2

11

Fig. 4

Fig. 5

Fig. 3

Fig. 6

Fig. 7